# EUROPEAN PATENT SPECIFICATION

(11) **EP 2 448 352 B1**
(45) Date of publication and mention of the grant of the patent: **08.11.2017**
(21) Application number: 10796716.8
(22) Date of filing: 02.07.2010
(51) Int. Cl.: H04L 5/00, H04L 1/00, H04W 72/08, H04L 27/26, H04B 7/26, H04W 28/18, H04W 48/04, H04W 72/00, H04W 48/16, H04W 84/04

(54) **METHOD, DEVICE AND COMMUNICATION SYSTEM FOR DATA PROCESSING IN RELAY NETWORK**
VERFAHREN, VORRICHTUNG UND KOMMUNIKATIONSSYSTEM ZUR DATENVERARBEITUNG IN EINEM RELAIS-NETZWERK
PROCÉDÉ, DISPOSITIF ET SYSTÈME DE COMMUNICATION PERMETTANT UN TRAITEMENT DE DONNÉES DANS UN RÉSEAU RELAIS

(30) Priority: 09.07.2009 CN 200910151069
(43) Date of publication of application: 02.05.2012
(73) Proprietor: Huawei Technologies Co., Ltd., Longgang District Shenzhen, Guangdong 518129 (CN)
(72) Inventor: ZHANG, Jietao, Shenzhen Guangdong 518129 (CN)
(74) Representative: Thun, Clemens
(86) International application number: PCT/CN2010/074897
(87) International publication number: WO 2011/003339

(56) References cited:
- EP-A1- 1 750 403
- EP-A1- 1 788 740
- WO-A1-2006/098608
- CN-A- 1 909 409
- CN-A- 101 322 330
- CN-A- 101 399 799
- LIYU CAI ET AL: "Improved HARQ scheme using channel quality feedback for OFDM systems", PROCEEDINGS / 2004 IEEE 59TH VEHICULAR TECHNOLOGY CONFERENCE, VTC 2004-SPRING : TOWARDS A GLOBAL WIRELESS WORLD ; 17 - 19 MAY 2004, MILAN, ITALY, IEEE OPERATIONS CENTER, PISCATAWAY, NJ, vol. 4, 17 May 2004 (2004-05-17), pages 1869-1872, XP010766485, DOI: 10.1109/VETECS.2004.1390597 ISBN: 978-0-7803-8255-8

## Description

### FIELD OF THE INVENTION

The present invention relates to the field of communication technologies, and in particular, to a method, an apparatus, and a system for data processing in a relay network.

### BACKGROUND OF THE INVENTION

The relay technology is a low-cost substitute for a base station. It can effectively increase the transmission rate for cellular subscribers, and thus increase the system capacity and effectively extend the coverage of a cellular network. Most radio systems in the future are based on the OFDM (Orthogonal Frequency Division Multiplexing) technology. The relay system can be combined with the OFDM technology to bring the amplification function of the relay system to full play on each subcarrier.

When the relay technology is applied to the OFDM system, because the system has multiple subcarriers and multi-hop links and channel conditions of the subcarriers in each link are different, analysis must be made with respect to each subcarrier to bring the relay function to full play. The subcarrier allocation technology in the relay system is an important research topic. A system and a method for allocation subcarriers in a wireless multihop relay network is for example disclosed in WO 2006/098608 A1.

In a relay cellular network, there are two-hop links in general, that is, a one-hop link between a base station and a relay, and another one-hop link between the relay and a subscriber. For downlink transmission, the incoming link of the relay is the link from the base station to the relay, and the outgoing link is the link from the relay to the subscriber. For uplink transmission, the incoming link of the relay is the link from the subscriber to the relay, and the outgoing link is the link from the relay to the base station. From the perspective of the relay, the incoming link of the relay refers to radio links corresponding to multiple subcarriers, and the outgoing link also refers to radio links corresponding to multiple subcarriers. How to rationally match the radio links corresponding to the subcarriers in the incoming link with the radio links corresponding to the subcarriers in the outgoing link has a great impact on the performance of the relay system.

In the prior art, when matching the subcarriers of the incoming link with the subcarriers of the outgoing link, the relay arranges the subcarriers of the incoming link in descending order according to channel quality, arranges the subcarriers of the outgoing link in descending order according to channel quality, and then matches the subcarriers of the incoming link with the subcarriers of the outgoing link in one-to-one correspondence according to the rearranged sequence. When the above matching method is used for a relay system that has K subcarriers, the complicity of sequential matching of subcarriers is O(K²). Such a matching of subcarriers of two links is for example disclosed in EP 1 750 403 A1.

During the implementation of the present invention, the relay in the prior art has the weakness of high complexity in re-matching the subcarriers of the incoming link and the outgoing link.

### SUMMARY OF THE INVENTION

The invention is defined by attached claims 1-7. All other references to embodiments are to be interpreted as examples useful for understanding the invention.

Objective of embodiments of the present invention is to provide a method, an apparatus, and a communication system for data processing in a relay network, which can reduce the complexity of re-matching subcarriers of an incoming link and an outgoing link by a relay.

An embodiment of the present invention provides a method for data processing in a relay network, including:
acquiring a channel quality parameter of an incoming link and a channel quality parameter of an outgoing link; and
re-matching the subcarriers of the incoming link and the subcarriers of the outgoing link when a difference between the channel quality parameter value of the incoming link and the channel quality parameter of the outgoing link is less than a first threshold and the channel quality parameter of the incoming link and the channel quality parameter of the outgoing link both are less than a second threshold;
wherein the re-matching the subcarriers of the incoming link and the subcarriers of the outgoing link comprises:
   arranging the subcarriers in descending order according to channel quality parameters of the subcarriers of the incoming link and the outgoing link, and re-matching the subcarriers of the incoming link and the subcarriers of the outgoing link in one-to-one correspondence according to magnitude of the channel quality parameter values; or
      arranging the subcarriers in ascending order according to channel quality parameters of the subcarriers of the incoming link and the outgoing link, and re-matching the subcarriers of the incoming link and the subcarriers of the outgoing link in one-to-one correspondence according to magnitude of the channel quality parameter values.An embodiment of the present invention provides an apparatus for data processing in a relay network, including:
      an acquiring module, configured to acquire a channel quality parameter of an incoming link and a channel quality parameter of an outgoing link; and
      a re-matching processing module, configured to re-match the subcarriers of the incoming link and the subcarriers of the outgoing link when a difference between the channel quality parameter of the incoming link and the channel quality parameter value of the outgoing link is less than a first threshold and the channel quality parameter of the incoming link and the channel quality parameter of the outgoing link both are less than a second threshold;
   wherein the re-matching processing module comprises:
      an arranging unit, configured to arrange the subcarriers in ascending order or descending order according to channel quality parameters of the subcarriers of the incoming link and the outgoing link; and
      a re-matching unit, configured to re-match the subcarriers of the incoming link and the subcarriers of the outgoing link in one-to-one correspondence according to magnitude of the channel quality parameter values.

An embodiment of the present invention provides a communication system, including a base station, a relay station, and a subscriber that are connected via a communication network, where the relay station or the base station includes the foregoing apparatus for data processing in a relay network.

According to the method, apparatus, and communication system for data processing in a relay network provided in the embodiments of the present invention, a channel quality parameter of an incoming link and a channel quality parameter of an outgoing link are acquired, and subcarrier of the link are re-matched only when the channel quality parameters meet the first and second threshold conditions. Therefore, the complexity of re-matching subcarriers of the incoming link and outgoing link by the relay can be reduced effectively.

### BRIEF DESCRIPTION OF THE DRAWINGS

FIG. 1 is a schematic diagram illustrating performance gains when subcarriers of different channel quality are re-matched in a technical solution according to an embodiment of the present invention;
FIG. 2 is a flow chart schematic of embodiment 1 of a method for data processing in a relay network according to the present invention;
FIG. 3 is a flow chart schematic of a first specific embodiment of the present invention;
FIG. 4 is a flow chart schematic of a second specific embodiment of the present invention; and
FIG. 5 is a schematic structural diagram of an embodiment of an apparatus for data processing in a relay network according to the present invention.

### DETAILED DESCRIPTION OF THE EMBODIMENTS

The technical solutions of the embodiments of the present invention are hereinafter described in detail with reference to the accompanying drawings and embodiments.

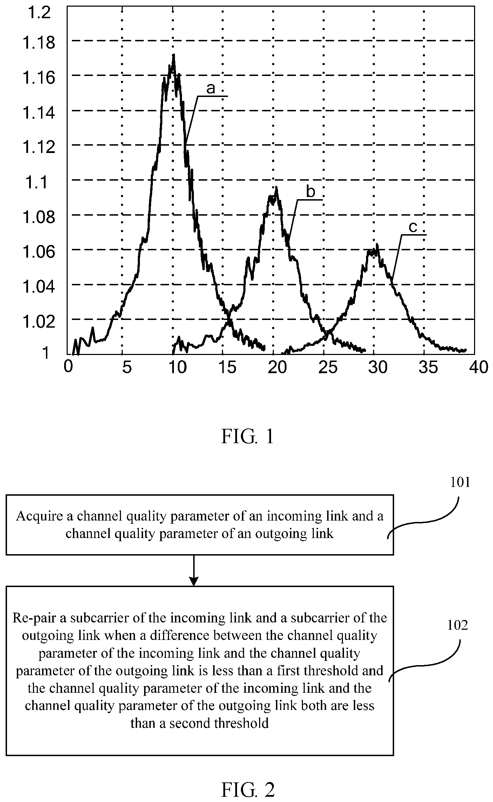

During the implementation of the present invention, the inventor researches the impact of re-matching subcarriers in a relay network on performance gains. FIG. 1 is a schematic diagram illustrating performance gains when subcarriers of different channel quality are re-matched in a technical solution according to an embodiment of the present invention. As shown in FIG. 1, the abscissa indicates channel quality (average signal-to-noise ratio) of an RS-MS link with a unit of dB, and the ordinate indicates performance gains when subcarriers are re-matched. Curve a indicate a relationship between a performance gain resulting from re-matching and the channel quality of the RS-MS link when the average signal-to-noise ratio of a BS-RS link is 10 dB, curve b indicate a relationship between a performance gain resulting from re-matching and the channel quality of the RS-MS link when the average signal-to-noise ratio of the BS-RS link is 20 dB, and curve c indicate a relationship between a performance gain resulting from re-matching and the channel quality of the RS-MS link when the average signal-to-noise ratio of the BS-RS link is 30 dB. As seen from FIG. 1:
(1) When average channel quality of two links is similar, the performance gain resulting from subcarrier re-matching is the greatest; when there is a great difference between the average channel quality of two links, the performance gain resulting from subcarrier re-matching is the smallest. As shown in FIG. 1, the average signal-to-noise ratio of the BS-RS link corresponding to curve a is 10 dB; when the average signal-to-noise ratio of the RS-MS link is also 10 dB, the performance gain resulting from subcarrier re-matching is the greatest, and as seen from the FIG. 1, the performance gain may be up to 17%; however, when the average signal-to-noise ratio of the RS-MS link deviates from 10 dB, the performance gain resulting from subcarrier re-matching drops gradually. The same trend may also be seen from curve b and curve c in FIG. 1.
(2) When the average channel quality (average signal-to-noise ratio) of two links is low, the performance gain resulting from subcarrier re-matching is great; as the average channel quality of the two links increases, the performance gain resulting from subcarrier re-matching also drops gradually. The comparison between curves a, b, and c in the FIG. 1 shows that: The peak value of curve a is the highest, and the average signal-to-noise ratio of the BS-RS link corresponding to the peak value and the average signal-to-noise ratio of the RS-MS link corresponding to the peak value are both 10 dB; the peak value of curve b is the second highest value, and the average signal-to-noise ratio of the BS-RS link corresponding to the peak value and the average signal-to-noise ratio of the RS-MS link corresponding to the peak value are both 20 dB; the peak value of curve c is the lowest, and the average signal-to-noise ratio of the BS-RS link corresponding to the peak value and the average signal-to-noise ratio of the RS-MS link corresponding to the peak value are both 30 dB.

In the embodiment of the present invention, a first threshold Gd_th and a second threshold Gv_th are set, where the first threshold Gd_th is used to indicate a difference between a channel quality parameter of an incoming link and a channel quality parameter of an outgoing link, and the second threshold Gv_th is used to indicate an average channel quality parameter of the incoming link and an average channel quality parameter of the outgoing link. The foregoing thresholds may indicate the channel quality, signal-to-noise ratio, or signal-to-interference ratio. Values of Gd_th and Gv_th may be set by experience, and the system operation complexity may be considered during the setting.

FIG. 2 is a flow chart schematic of embodiment 1 of a method for data processing in a relay network according to an embodiment of the present invention. As shown in FIG. 2, the method includes the following steps:
Step 101: Acquire a channel quality parameter of an incoming link and a channel quality parameter of an outgoing link. In this step, the channel quality parameter of the incoming link and the channel quality parameter of the outgoing link may be received and measured by a relay station.
Step 102: Re-match the subcarriers of the incoming link and the subcarriers of the outgoing link when a difference between the channel quality parameter of the incoming link and the channel quality parameter of the outgoing link is less than a first threshold and the channel quality parameter of the incoming link and the channel quality parameter of the outgoing link both are less than a second threshold.

In this embodiment, the channel quality parameter of the incoming link and the channel quality parameter of the outgoing link are first acquired, and when the channel quality parameter of the incoming link and the channel quality parameter of the outgoing link meet the first and second threshold conditions, the subcarrier is re-matched. Therefore, a necessary subcarrier is re-matched selectively, and the complexity of subcarrier re-matching can be reduced effectively.

The re-matching of subcarriers in the foregoing embodiment is also applicable to a subchannel. In addition, the channel quality parameter of the incoming link may be an average channel quality parameter of subcarriers of the incoming link, and the channel quality parameter of the outgoing link may be an average channel quality parameter of subcarriers of the outgoing link.

The technical solutions provided in the foregoing embodiment of the present invention are also applicable when there are multiple outgoing links or incoming links. For example, in a BS-RS-MS system, when an RS corresponds to multiple MSs, multiple incoming links exist in uplink data transmission, and multiple outgoing links exist in downlink data transmission.

When multiple outgoing links exist, the acquiring the channel quality parameter of the incoming link and the channel quality parameter of the outgoing link in the foregoing embodiment may be acquiring channel quality parameters of an incoming link and at least two outgoing links; and
when the difference between the channel quality parameter of the incoming link and the channel quality parameter of the outgoing link is less than the first threshold and the channel quality parameter of the incoming link and the channel quality parameter of the outgoing link both are less than the second threshold, the re-matching the subcarriers of the incoming link and the subcarriers of the outgoing link may be:
processing the channel quality parameter of the incoming link and the channel quality parameter of the outgoing link, and when the difference between the channel quality parameter of the incoming link and the channel quality parameter of the outgoing link is less than the first threshold and the channel quality parameter of the incoming link and the channel quality parameter of the outgoing link both are less than the second threshold, re-matching the subcarrier of the incoming link and the subcarriers of the outgoing link.

When multiple incoming links exist, the acquiring the channel quality parameter of the incoming link and the channel quality parameter of the outgoing link in the foregoing embodiment may be acquiring channel quality parameters of an outgoing link and at least two incoming links; and
when the difference between the channel quality parameter of the incoming link and the channel quality parameter of the outgoing link is less than the first threshold and the channel quality parameter of the incoming link and the channel quality parameter of the outgoing link both are less than the second threshold, the re-matching the subcarriers of the incoming link and the subcarriers of the outgoing link may be:
processing the channel quality parameter of the incoming link and the channel quality parameter of the outgoing link respectively, and when the difference between the channel quality parameter of the incoming link and the channel quality parameter of the outgoing link is less than the first threshold and the channel quality parameter of the incoming link and the channel quality parameter of the outgoing link both are less than the second threshold, re-matching the subcarriers of the incoming link and the subcarriers of the outgoing link.

That is, when multiple incoming links or outgoing links exist, re-matching is performed for a single incoming link or a single outgoing link among the links respectively.

The method for data processing in a relay network according to the foregoing embodiment may be used in a BS-RS-MS system. In this case, as regards uplink data transmission, acquiring a channel quality parameter of an incoming link and a channel quality parameter of an outgoing link may be acquiring a channel quality parameter of a link from a subscriber to a relay station and acquiring a channel quality parameter of a link from the relay station to a base station; as regards downlink data transmission, acquiring a channel quality parameter of an incoming link and a channel quality parameter of an outgoing link may be acquiring a channel quality parameter of a link from the base station to the relay station and acquiring a channel quality parameter of a link from the relay station to the subscriber.

In addition, re-matching the subcarriers of the incoming link and the subcarriers of the outgoing link in the foregoing embodiment of the present invention includes: arranging subcarriers in descending order according to channel quality parameters of the subcarriers of the incoming link and the outgoing link respectively, and then matching the subcarriers of the incoming link and the subcarriers of the outgoing link in one-to-one correspondence according to the magnitude of channel quality parameter values.

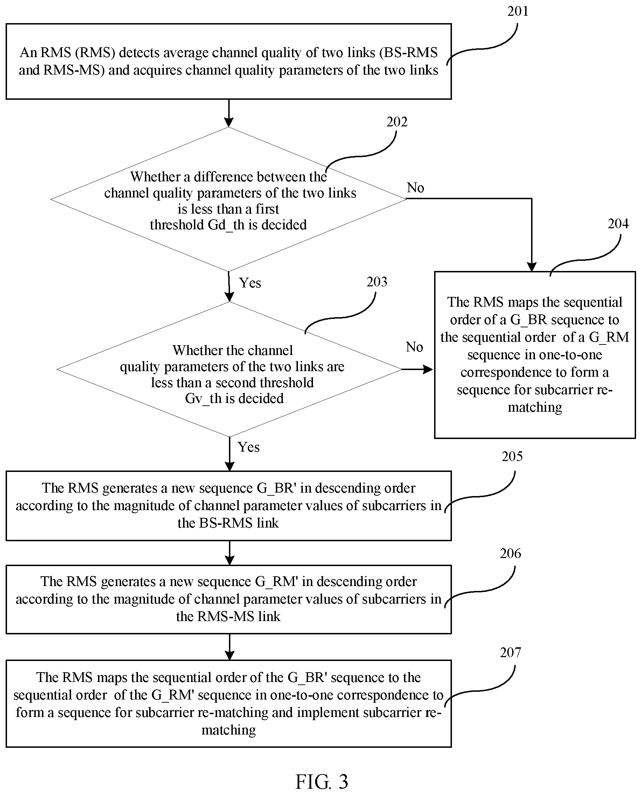

The method for data processing in a relay network according to the foregoing embodiment may be applied in a scenario of relay transmission of a single subscriber (for example, coordinated transmission between subscribers). FIG. 3 is a flow chart schematic of a first specific embodiment of the present invention, including the following steps:
Step 201: A relay mobile station (RMS) detects average channel quality of two segments of links (BS-RMS and RMS-MS), acquires channel quality parameters of the two links, and records the parameters as G_BR and G_RM respectively.
Step 202: Whether a difference between the channel quality parameters of the two links is less than a first threshold Gd_th is decided; if the difference between the channel quality parameters of the two links is less than the first threshold Gd_th, execute step 203; otherwise, execute step 204.
Step 203: Whether the channel quality parameters of the two links are less than a second threshold Gv_th is decided; if the channel quality parameters of the two links are less than the second threshold Gv_th, execute step 205; otherwise, execute step 204.
Step 204: The relay subscriber maps the sequential order of a G_BR sequence to the sequential order of a G_RM sequence in one-to-one correspondence to form a sequence for subcarrier re-matching.
Step 205: The relay subscriber generates a new sequence G_BR' in descending order according to the magnitude of channel parameter values of subcarriers in the BS-RMS link.
Step 206: The relay subscriber generates a new sequence G_RM' in descending order according to the magnitude of channel parameter values of subcarriers in the RMS-MS link.
Step 207: The relay subscriber maps the sequential order of the G_BR' sequence to the sequential order of the G_RM' sequence in one-to-one correspondence, that is, the relay subscriber matches a subcarrier having a greater channel parameter in the BS-RMS link with a subcarrier having a greater channel parameter in the RMS-MS link, and matches a subcarrier having a smaller channel parameter in the BS-RMS link with a subcarrier having a smaller channel parameter in the RMS-MS link to implement re-matching of subcarriers.

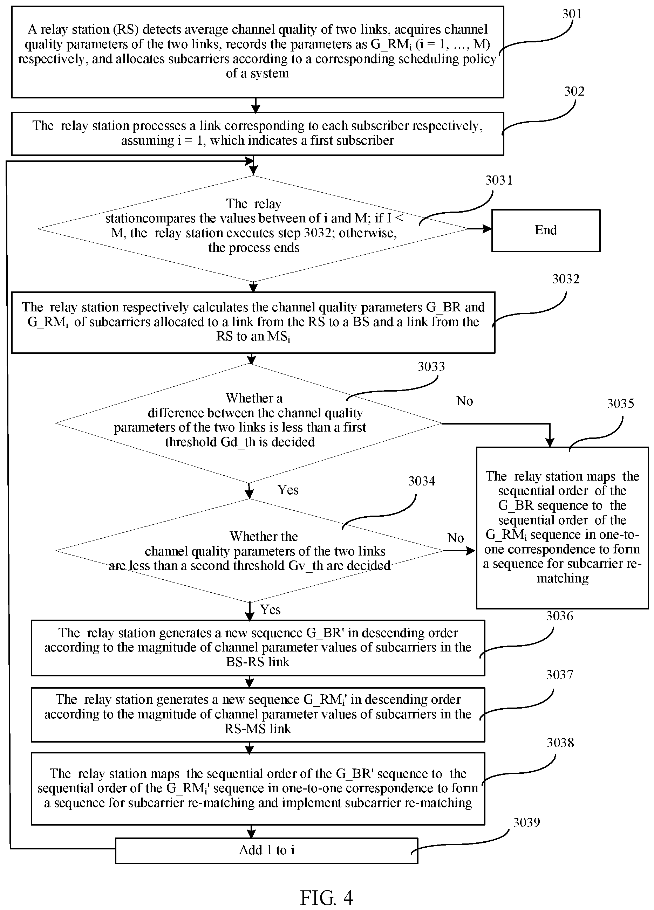

The foregoing embodiment is mainly directed to the scenario of transmission of a single subscriber, and is also applicable to a scenario of relay transmission of multiple subscribers (for example, fixed relay transmission). FIG. 4 is a flow chart schematic of a second specific embodiment of the present invention. As shown in FIG. 4, the following steps are included:
Step 301: A relay station (RS) detects average channel quality of two links (BS-RS and RS-each MS), acquires channel quality parameters of the two links, records the parameters as G_RMᵢ (i = 1, ..., M) respectively (where M indicates the number of scheduled subscribers), and allocates subcarriers according to a corresponding scheduling policy of a system.
Step 302: The relay station processes a link corresponding to each subscriber respectively, assuming i = 1, which indicates a first subscriber.
Step 3031: The relay station compares the values between i and M; if i < M, step 3032 is executed; otherwise, the process ends.
Step 3032: The relay station respectively calculates the channel quality parameters G_BR and G_RMᵢ of subcarriers allocated to a link from the RS to a BS and a link from the RS to an MSᵢ.
Step 3033: The relay station decides whether a difference between the channel quality parameters of the two links is less than a first threshold Gd_th; if the difference between the channel quality parameters of the two links is less than the first threshold Gd_th, execute step 3034; otherwise, execute step 3035.
Step 3034: The relay station decides whether the channel quality parameters of the two links are less than a second threshold Gv_th; if the channel quality parameters of the two links are less than the second threshold Gv_th, execute step 3036; otherwise, execute step 3035.
Step 3035: The relay station maps the sequential order of the G_BR sequence to the sequential order of the G_RMᵢ sequence in one-to-one correspondence to form a sequence for subcarrier re-matching.
Step 3036: The relay station generates a new sequence G_BR' in descending order according to the magnitude of channel parameter values of subcarriers in the BS-RS link.
Step 3037: The relay station generates a new sequence G_RMᵢ' in descending order according to the magnitude of channel parameter values of subcarriers in the RS-MS link.
Step 3038: The relay station maps the sequential order of the G_BR' sequence to the sequential order of the G_RMᵢ' sequence in one-to-one correspondence, that is, the relay station matches a subcarrier having a greater channel parameter in the BS-RS link with a subcarrier having a greater channel parameter in the RS-MS link, and matches a subcarrier having a smaller channel parameter in the BS-RS link with a subcarrier having a smaller channel parameter in the RS-MS link to implement re-matching of subcarriers.
Step 3039: The relay station adds 1 to i and execute step 3031.

The method for data processing in a relay network in the foregoing embodiment is directed to a scenario of relay transmission of multiple subscribers.

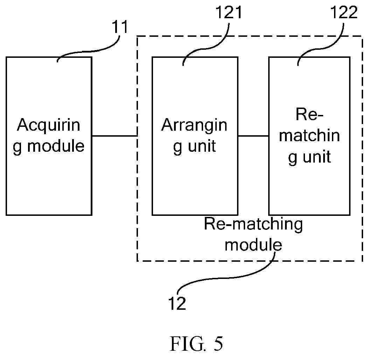

FIG. 5 is a schematic structural diagram of an embodiment of an apparatus for data processing in a relay network according to the present invention. As shown in FIG. 5, the apparatus includes an acquiring module 11 and a re-matching processing module 12. The acquiring module 11 is configured to acquire a channel quality parameter of an incoming link and a channel quality parameter of an outgoing link. The re-matching processing module 12 is configured to re-match the subcarriers of the incoming link and the subcarriers of the outgoing link when a difference between the channel quality parameter of the incoming link and the channel quality parameter of the outgoing link is less than a first threshold and the channel quality parameter of the incoming link and the channel quality parameter of the outgoing link both are less than a second threshold.

The apparatus for data processing in a relay network according to the embodiment judges whether channel quality of the incoming link and channel quality of the outgoing link meet the first and second threshold conditions, that is, whether the channel quality parameter of the incoming link and the channel quality parameter of the outgoing link is similar and whether the channel quality parameter of the incoming link and the channel quality parameter of the outgoing link both are low, and re-matches the subcarrier of the incoming link when the foregoing conditions are met, thereby reducing the system complexity while guaranteeing the performance.

In the foregoing embodiment, the re-matching processing module 12 may be divided into an arranging unit 121 and a re-matching unit 122. The arranging unit 121 is configured to arrange subcarriers in ascending order or descending order according to channel quality parameters of the subcarriers of the incoming link and the outgoing link. The re-matching unit 122 is configured to re-match the subcarriers of the incoming link and the outgoing link in one-to-one correspondence according to the magnitude of the channel quality parameter values.

The apparatus for data processing in a relay network according to the foregoing embodiment may be disposed in a relay station. In this case, the acquiring module may be divided into a first acquiring unit and a second acquiring unit. The first acquiring unit is configured to acquire a channel quality parameter of a link from a base station to the relay station and a channel quality parameter of a link from the relay station to a subscriber during downlink data transmission. The second acquiring unit is configured to acquire a channel quality parameter of a link from the subscriber to the relay station and a channel quality parameter of a link from the relay station to the base station during uplink data transmission. In addition, the apparatus may be disposed in the base station to provide a centralized processing mode.

An embodiment of the present invention also provides a communication system. The system includes a base station, a relay station, and a user terminal that are connected via a communication network. The foregoing apparatus for data processing in a relay network is disposed in the relay station or the base station. When disposed in the base station, the apparatus for data processing in a relay network enables centralized processing, that is, each node sends information such as their respective channel quality parameters to a central node (namely, the base station), and the base station performs processing and notifies each relay station of a subcarrier re-matching result.

In addition, the method for data processing in a relay network according to the foregoing embodiments of the present invention may be applied in a two-hop system or a multi-hop system. When the method is applied in the multi-hop system, a multi-hop link may be decomposed in sequence into multiple cascaded two-hop links, and re-matching is performed for each two-hop link in sequence according to the foregoing embodiments of the present invention to implement subcarrier re-matching for the multi-hop link.

In the foregoing embodiment of the present invention, the subcarrier re-matching is taken for illustration. The embodiment may also be applied to a subchannel re-matching technology. A subchannel is formed by aggregating multiple correlated subcarriers. When the foregoing technical solutions are applied to subchannel allocation, the necessary number of subchannels to be matched in a practical system can be effectively reduced.

According to the method, apparatus, and communication system for data processing in a relay network provided in the embodiments of the present invention, channel quality parameters of an incoming link and an outgoing link are acquired, and when the channel quality parameters meet set first and second thresholds, subcarrier re-matching is performed. Therefore, the complexity of subcarrier re-matching can be reduced effectively while the performance of subcarrier re-matching is guaranteed. For example, in a multi-subscriber system, the number of subcarriers is K, the number of subscribers is M, and each subscriber is allocated with the same number of subcarriers. When the subcarrier re-matching method in the prior art is used, the system complexity is O(K²); however, when the foregoing technical solutions of the embodiments of the present invention are used, the number of subscribers requiring subcarrier re-matching is N, and the system complexity is O((NK/M)²). If only one half of the subscribers require subcarrier re-matching, the complexity is 1/4 of the original complexity.

Finally, it should be noted that the above embodiments are intended for describing the technical solutions of the embodiments of the present invention instead of limiting the present invention. Although the embodiments of the present invention are described in detail with reference to exemplary embodiments, persons of ordinary skill in the art should understand that modifications and replacements can still be made to the technical solutions of the embodiments of the present invention without departing from the scope of the technical solutions of the embodiments of the present invention.

## Claims

1. A method for data processing in a relay network, comprising:
acquiring (101) a channel quality parameter of at least one subcarrier of an incoming link and a channel quality parameter of at least one subcarrier of an outgoing link; and
re-matching (102) the subcarriers of the incoming link and the subcarriers of the outgoing link when a difference between the acquired channel quality parameter value of the incoming link and the acquired channel quality parameter of the outgoing link is less than a first threshold and the acquired channel quality parameter of the incoming link and the acquired quality parameter of the outgoing link both are less than a second threshold;
wherein the re-matching (102) the subcarriers of the incoming link and the subcarriers of the outgoing link comprises:
arranging the subcarriers in descending order according to channel quality parameters of the subcarriers of the incoming link and the outgoing link, and re-matching the subcarriers of the incoming link and the subcarriers of the outgoing link in one-to-one correspondence according to magnitude of the channel quality parameter values; or
arranging the subcarriers in ascending order according to channel quality parameters of the subcarriers of the incoming link and the outgoing link, and re-matching the subcarriers of the incoming link and the subcarriers of the outgoing link in one-to-one correspondence according to magnitude of the channel quality parameter values.

2. The method for data processing in a relay network according to claim 1, wherein the channel quality parameter of the incoming link is an average channel quality parameter of the subcarriers of the incoming link, and the channel quality parameter of the outgoing link is an average channel quality parameter of subcarriers of the outgoing link.

3. The method for data processing in a relay network according to any one of claims 1-2, wherein the acquiring (101) the channel quality parameter of the incoming link and the channel quality parameter of the outgoing link comprises:
acquiring a channel quality parameter of a link from a base station to a relay station and a channel quality parameter of a link from the relay station to a subscriber during downlink data transmission; or
acquiring a channel quality parameter of a link from the subscriber to the relay station and a channel quality parameter of a link from the relay station to the base station during uplink data transmission.

4. An apparatus adapted to perform data processing in a relay network, comprising:
an acquiring module (11), configured to acquire a channel quality parameter of at least one subcarrier of the incoming link and a channel quality parameter of at least one subcarrier of the outgoing link; and
a re-matching processing module (12), configured to re-match the subcarriers of the incoming link and the subcarriers of the outgoing link when a difference between the acquired channel quality parameter of the incoming link and the acquired channel quality parameter of the outgoing link is less than a first threshold and the acquired channel quality parameter value of the incoming link and the acquired channel quality parameter of the outgoing link both are less than a second threshold;
wherein the re-matching processing module (12) comprises:
an arranging unit (121), configured to arrange the subcarriers in ascending order or descending order according to channel quality parameters of the subcarriers of the incoming link and the outgoing link; and
a re-matching unit (122), configured to re-match the subcarriers of the incoming link and the subcarriers of the outgoing link in one-to-one correspondence according to magnitude of the channel quality parameter values.

5. The apparatus for data processing in a relay network according to claim 4, wherein the acquiring module (11) comprises:
a first acquiring unit, configured to acquire a channel quality parameter of a link from a base station to a relay station and a channel quality parameter of a link from the relay station to a subscriber during downlink data transmission; and
a second acquiring unit, configured to acquire a channel quality parameter of a link from the subscriber to the relay station and a channel quality parameter of a link from the relay station to the base station during uplink data transmission.

6. The apparatus for data processing in a relay network according to any one of claims 4 to 7, wherein the apparatus is a relay station or a base station.

7. A communication system, comprising a base station, a relay station, and a user terminal that are connected via a communication network, wherein the relay station or the base station comprises the apparatus for data processing in a relay network according to any one of claims 4 to 6.

## Patentansprüche

1. Verfahren zur Datenverarbeitung in einem Weiterleitungsnetz, das Folgendes umfasst:
Erfassen (101) eines Kanalqualitätsparameters wenigstens eines Unterträgers einer ankommenden Verbindungsstrecke und eines Kanalqualitätsparameters wenigstens eines Unterträgers einer abgehenden Verbindungsstrecke; und
erneutes Abstimmen (102) der Unterträger der ankommenden Verbindungsstrecke und der Unterträger der abgehenden Verbindungsstrecke, wenn eine Differenz zwischen dem erfassten Kanalqualitätsparameterwert der ankommenden Verbindungsstrecke und dem erfassten Kanalqualitätsparameter der abgehenden Verbindungsstrecke kleiner ist als ein erster Schwellenwert und der erfasste Kanalqualitätsparameter der ankommenden Verbindungsstrecke und der erfasste Qualitätsparameter der abgehenden Verbindungsstrecke beide kleiner als ein zweiter Schwellenwert sind;
wobei das erneute Abstimmen (102) der Unterträger der ankommenden Verbindungsstrecke und der Unterträger der abgehenden Verbindungsstrecke Folgendes umfasst:
Anordnen der Unterträger in absteigender Reihenfolge gemäß Kanalqualitätsparametern der Unterträger der ankommenden Verbindungsstrecke und
der abgehenden Verbindungsstrecke und erneutes Abstimmen der Unterträger der ankommenden Verbindungsstrecke und der Unterträger der abgehenden Verbindungsstrecke in einer Eins-zu-eins-Beziehung gemäß der Größe der Kanalqualitätsparameterwerte; oder
Anordnen der Unterträger in aufsteigender Reihenfolge gemäß Kanalqualitätsparametern der Unterträger der ankommenden Verbindungsstrecke und der abgehenden Verbindungsstrecke und erneutes Abstimmen der Unterträger der ankommenden Verbindungsstrecke und der Unterträger der abgehenden Verbindungsstrecke in einer Eins-zu-eins-Beziehung gemäß der Größe der Kanalqualitätsparameterwerte.

2. Verfahren zur Datenverarbeitung in einem Weiterleitungsnetz nach Anspruch 1, wobei der Kanalqualitätsparameter der ankommenden Verbindungsstrecke ein mittlerer Kanalqualitätsparameter der Unterträger der ankommenden Verbindungsstrecke ist und der Kanalqualitätsparameter der abgehenden Verbindungsstrecke ein mittlerer Kanalqualitätsparameter der Unterträger der abgehenden Verbindungsstrecke ist.

3. Verfahren zur Datenverarbeitung in einem Weiterleitungsnetz nach einem der Ansprüche 1-2, wobei das Erfassen (101) des Kanalqualitätsparameters der ankommenden Verbindungsstrecke und des Kanalqualitätsparameters der abgehenden Verbindungsstrecke Folgendes umfasst:
Erfassen eines Kanalqualitätsparameters einer Verbindungsstrecke von einer Basisstation zu einer Weiterleitungsstation und eines Kanalqualitätsparameters einer Verbindungsstrecke von der Weiterleitungsstation zu einem Teilnehmer während einer Abwärtsstreckendatenübertragung; oder
Erfassen eines Kanalqualitätsparameters einer Verbindungsstrecke von dem Teilnehmer zu der Weiterleitungsstation und eines Kanalqualitätsparameters einer Verbindungsstrecke von der Weiterleitungsstation zu der Basisstation während einer Aufwärtsstreckendatenübertragung.

4. Vorrichtung, die ausgelegt ist, Datenverarbeitung in einem Weiterleitungsnetz auszuführen, und die Folgendes umfasst:
ein Erfassungsmodul (11), das konfiguriert ist, einen Kanalqualitätsparameter wenigstens eines Unterträgers der ankommenden Verbindungsstrecke und einen Kanalqualitätsparameter wenigstens eines Unterträgers der abgehenden Verbindungsstrecke zu erfassen; und
ein Modul (12) zum erneuten Abstimmen, das konfiguriert ist, die Unterträger der ankommenden Verbindungsstrecke und die Unterträger der abgehenden Verbindungsstrecke erneut abzustimmen, wenn eine Differenz zwischen dem erfassten Kanalqualitätsparameter der ankommenden Verbindungsstrecke und dem erfassten Kanalqualitätsparameter der abgehenden Verbindungsstrecke kleiner ist als ein erster Schwellenwert und der erfasste Kanalqualitätsparameterwert der ankommenden Verbindungsstrecke und der erfasste Kanalqualitätsparameter der abgehenden Verbindungsstrecke beide kleiner als ein zweiter Schwellenwert sind;
wobei das Modul (12) zum erneuten Abstimmen Folgendes umfasst:
eine Anordnungseinheit (121), die konfiguriert ist, die Unterträger in aufsteigender oder absteigender Reihenfolge gemäß Kanalqualitätsparametern der Unterträger der ankommenden Verbindungsstrecke und der abgehenden Verbindungsstrecke anzuordnen; und
eine Einheit (122) zum erneuten Abstimmen, die konfiguriert ist, die Unterträger der ankommenden Verbindungsstrecke und die Unterträger der abgehenden Verbindungsstrecke in einer Eins-zu-eins-Beziehung gemäß der Größe der Kanalqualitätsparameterwerte neu abzustimmen.

5. Vorrichtung zur Datenverarbeitung in einem Weiterleitungsnetz nach Anspruch 4, wobei das Erfassungsmodul (11) Folgendes umfasst:
eine erste Erfassungseinheit, die konfiguriert ist, einen Kanalqualitätsparameter einer Verbindungsstrecke von einer Basisstation zu einer Weiterleitungsstation und einen Kanalqualitätsparameter einer Verbindungsstrecke von der Weiterleitungsstation zu einem Teilnehmer während einer Abwärtsstreckendatenübertragung zu erfassen; und eine zweite Erfassungseinheit, die konfiguriert ist, einen Kanalqualitätsparameter einer Verbindungsstrecke von dem Teilnehmer zu der Weiterleitungsstation und einen Kanalqualitätsparameter einer Verbindungsstrecke von der Weiterleitungsstation zu der Basisstation während einer Aufwärtsstreckendatenübertragung zu erfassen.

6. Vorrichtung zur Datenverarbeitung in einem Weiterleitungsnetz nach einem der Ansprüche 4 bis 7, wobei die Vorrichtung eine Weiterleitungsstation oder eine Basisstation ist.

7. Kommunikationssystem, das eine Basisstation, eine Weiterleitungsstation und ein Anwenderendgerät, die über ein Kommunikationsnetz verbunden sind, umfasst, wobei die Weiterleitungsstation oder die Basisstation die Vorrichtung zur Datenverarbeitung in einem Weiterleitungsnetz nach einem der Ansprüche 4 bis 6 umfasst.

## Revendications

1. Procédé permettant un traitement de données dans un réseau relais, comprenant les étapes suivantes :
acquérir (101) un paramètre de qualité de canal d'au moins une sous-porteuse d'une liaison entrante et un paramètre de qualité de canal d'au moins une sous-porteuse d'une liaison sortante ; et
remettre en correspondance (102) les sous-porteuses de la liaison entrante et les sous-porteuses de la liaison sortante lorsqu'une différence entre la valeur de paramètre de qualité de canal acquise de la liaison entrante et le paramètre de qualité de canal acquis de la liaison sortante est inférieure à un premier seuil et que le paramètre de qualité de canal acquis de la liaison entrante et le paramètre de qualité acquis de la liaison sortante sont tous deux inférieurs à un deuxième seuil ;
l'étape consistant à remettre en correspondance (102) les sous-porteuses de la liaison entrante et les sous-porteuses de la liaison sortante comprenant :
disposer les sous-porteuses en ordre descendant selon des paramètres de qualité de canal des sous-porteuses de la liaison entrante et de la liaison sortante, et remettre en correspondance les sous-porteuses de la liaison entrante et les sous-porteuses de la liaison sortante dans une correspondance biunivoque selon la magnitude des valeurs de paramètre de qualité de canal ; ou
disposer les sous-porteuses en ordre ascendant selon des paramètres de qualité de canal des sous-porteuses de la liaison entrante et de la liaison sortante, et remettre en correspondance les sous-porteuses de la liaison entrante et les sous-porteuses de la liaison sortante dans une correspondance biunivoque selon la magnitude des valeurs de paramètre de qualité de canal.

2. Procédé pour un traitement de données dans un réseau relais selon la revendication 1, dans lequel le paramètre de qualité de canal de la liaison entrante est un paramètre de qualité de canal moyen des sous-porteuses de la liaison entrante, et le paramètre de qualité de canal de la liaison sortante est un paramètre de qualité de canal moyen des sous-porteuses de la liaison sortante.

3. Procédé pour un traitement de données dans un réseau relais selon l'une quelconque des revendications 1-2, dans lequel l'étape consistant à acquérir (101) le paramètre de qualité de canal de la liaison entrante et le paramètre de qualité de canal de la liaison sortante comprend :
acquérir un paramètre de qualité de canal d'une liaison allant d'une station de base à une station relais et un paramètre de qualité de canal d'une liaison allant de la station relais à un abonné durant une transmission de données de liaison descendante ; ou acquérir un paramètre de qualité de canal d'une liaison allant de l'abonné à la station relais et un paramètre de qualité de canal d'une liaison allant de la station relais à la station de base durant une transmission de données de liaison montante.

4. Appareil conçu pour exécuter un traitement de données dans un réseau relais, comprenant :
un module d'acquisition (11), configuré pour acquérir un paramètre de qualité de canal d'au moins une sous-porteuse de la liaison entrante et un paramètre de qualité de canal d'au moins une sous-porteuse de la liaison sortante ; et
un module de traitement de remise en correspondance (12), configuré pour remettre en correspondance les sous-porteuses de la liaison entrante et les sous-porteuses de la liaison sortante lorsqu'une différence entre le paramètre de qualité de canal acquis de la liaison entrante et le paramètre de qualité de canal acquis de la liaison sortante est inférieure à un premier seuil et que la valeur de paramètre de qualité de canal acquis de la liaison entrante et le paramètre de qualité de canal acquis de la liaison sortante sont tous deux inférieurs à un deuxième seuil ;
le module de traitement de remise en correspondance (12) comprenant :
une unité de mise en place (121), configurée pour disposer les sous-porteuses en ordre ascendant ou en ordre descendant selon des paramètres de qualité de canal des sous-porteuses de la liaison entrante et de la liaison sortante ; et
une unité de remise en correspondance (122), configurée pour remettre en correspondance les sous-porteuses de la liaison entrante et les sous-porteuses de la liaison sortante dans une correspondance biunivoque selon la magnitude des valeurs de paramètre de qualité de canal.

5. Appareil pour un traitement de données dans un réseau relais selon la revendication 4, dans lequel le module d'acquisition (11) comprend :
une première unité d'acquisition, configurée pour acquérir un paramètre de qualité de canal d'une liaison allant d'une station de base à une station relais et un paramètre de qualité de canal d'une liaison allant de la station relais à un abonné durant une transmission de données de liaison descendante ; et
une deuxième unité d'acquisition, configurée pour acquérir un paramètre de qualité de canal d'une liaison allant de l'abonné à la station relais et un paramètre de qualité de canal d'une liaison allant de la station relais à la station de base durant une transmission de données de liaison montante.

6. Appareil pour un traitement de données dans un réseau relais selon l'une quelconque des revendications 4 à 7, dans lequel l'appareil est une station relais ou une station de base.

7. Système de communication, comprenant une station de base, une station relais, et un terminal utilisateur qui sont connectés par l'intermédiaire d'un réseau de communication, la station relais ou la station de base comportant l'appareil pour un traitement de données dans un réseau relais selon l'une quelconque des revendications 4 à 6.
